# EUROPÄISCHE PATENTANMELDUNG

(11) **EP 3 282 108 A1**
(43) Veröffentlichungstag der Anmeldung: **14.02.2018**
(21) Anmeldenummer: 17182342.0
(22) Anmeldetag: 20.07.2017
(51) Int. Cl.: F02B 29/04, F02M 25/028, F02M 25/08, F02M 25/022, F28D 21/00

(54) **LADELUFTKÜHLER, INSBESONDERE FÜR EIN KRAFTFAHRZEUG**

(30) Priorität: 10.08.2016 DE 102016214886
(71) Anmelder: Mahle International GmbH, 70376 Stuttgart (DE)
(72) Erfinder: BÜRCK, Christian, 71032 Böblingen (DE); DIETERLE, Stefan, 73733 Esslingen (DE); EHMKE, Alexander, 32760 Detmold (DE); FEUERECKER, Günther, 70567 Stuttgart (DE); PANTOW, Eberhard, 71364 Winnenden (DE); STRAUß, Thomas, 73274 Notzingen (DE); STRIEGE, Holger, 71696 Möglingen (DE)
(74) Vertreter: BRP Renaud & Partner mbB Rechtsanwälte Patentanwälte Steuerberater

(57) **Zusammenfassung**

Die Erfindung betrifft einen Ladeluftkühler (1) für eine Brennkraftmaschine. Der Ladeluftkühler (1) umfasst einen Wärmeübertrager (2), der mehrere Fluidpfade (3) zum Durchströmen mit der zu kühlenden Ladeluft (5) aufweist. Ferner umfasst der Ladeluftkühler (1) einen am Wärmeübertrager (2) angebrachten und mit den Fluidpfaden (3) kommunizierenden Sammler (9). Dabei ist ein unterer Bereich des Sammlers (9) als Kondensat-Aufnahmebereich (5) zum Aufnehmen von kondensierter Ladeluft (5) ausgebildet. Im Sammler (9) ist des Weiteren ein Rohrkörper (8) angeordnet, welcher einen sowohl von kondensierter als auch nichtkondensierter Ladeluft (5) durchströmbaren Fluidkanal (18) begrenzt. Im Rohrkörper (8) ist ein Durchbruch (10) ausgebildet, der den Fluidkanal (18) fluidisch mit dem Kondensat-Aufnahmebereich (4) verbindet.

## Beschreibung

Die vorliegende Erfindung betrifft einen Ladeluftkühler, insbesondere für ein Kraftfahrzeug, insbesondere für eine Brennkraftmaschine sowie eine Brennkraftmaschine mit einem solchen Ladeluftkühler.

Aus der DE 10 2009 042 981 A1 ist ein gattungsgemäßer Ladeluftkühler mit einem Lufteintrittskasten und einem Luftaustrittskasten sowie mit einem Kondensat-Sammler zum Sammeln von in dem Ladeluftkühler abgeschiedenem Kondensat bekannt. Darüber hinaus ist eine Kondensat-Leitung vorgesehen, die über einen Eingang mit dem Kondensat-Sammler und über einen Ausgang mit einer Ansaugleitung einer Brennkraftmaschine verbunden ist. Hierdurch soll während des Betriebs des Ladeluftkühlers eine differenzdruckbedingte Kondensat-Absaugung aus dem Kondensat-Sammler bewirkt werden, wodurch insbesondere bisher verwendete Aktuatoren, Klappen und/oder Steuerungen entfallen können.

Aus der DE 10 2009 011 634 A1 ist ein Ladeluftkühler bekannt, der ein Schlauchelement umfasst, welches den Ladeluftkühler mit einem Ansaugkrümmer verbindet.

Die vorliegende Erfindung beschäftigt sich mit dem Problem, für einen Ladeluftkühler der gattungsgemäßen Art eine verbesserte oder zumindest alternative Ausführungsform anzugeben, die sich insbesondere durch eine verbesserte Abführung von kondensierter Ladeluft aus dem Ladeluftkühler auszeichnet.

Diese Aufgabe wird durch den Gegenstand der unabhängigen Patentansprüche gelöst. Bevorzugte Ausführungsformen sind Gegenstand der abhängigen Patentsprüche.

Grundgedanke der Erfindung ist demnach, in einem Sammler des Ladeluftkühlers, in welchem die Ladeluft nach dem Durchströmen des Wärmeübertragers gesammelt wird, einen Kondensat-Aufnahmebereich zur Aufnahme von aus der Ladeluft ausfallendem Kondensat anzuordnen. Ein solcher Sammler ist dem Fachmann auch als "Luftsammelkasten" oder "Sammelkasten" bekannt.

Da die Ladeluft im Wärmeübertrager durch Abführung von Wärme an ein Kühlmittel gekühlt wird, erfolgt die Kondensation von Teilen der Ladeluft typischerweise während des Durchströmens des Wärmeübertragers oder unmittelbar am Austritt aus dem Wärmeübertrager, also beim Eintritt in den stromab des Wärmeübertragers angeordneten Sammler.

Die Ausbildung eines Kondensat-Aufnahmebereichs in besagtem Sammler bewirkt einerseits, dass das Kondensat gezielt dort gesammelt wird, wo es auch ausfällt, also entsteht; andererseits wird für den Kondensat-Aufnahme-bereich kein zusätzlicher Bauraum benötigt, da dieser in den stromab des Wärmeübertragers angebrachten Sammler integriert ist.

Des Weiteren fußt die Erfindung auf dem Gedanken, im Sammler einen Rohrkörper anzuordnen, welcher einen sowohl vom Kondensat als auch der Ladeluft durchströmbaren Fluidkanal begrenzt. Dabei ist im Rohrkörper ein Durchbruch ausgebildet, der den Fluidkanal fluidisch mit dem Kondensat-Aufnahmebereich verbindet. Der Durchbruch befindet sich bevorzugt am tiefsten Punkt des Rohrkörpers, welcher besonders zweckmäßig als U-förmiger Rohrkörper ausgebildet sein kann.

Auf diese Weise kann die durch den Rohrkörper strömende Ladeluft dazu verwendet werden, das im Kondensat-Aufnahmebereich angesammelte Kondensat quasi "mitzunehmen" und aus dem Kondensat-Aufnahmebereich abzuführen. Dies ist auch bei einer nur geringen Druckdifferenz des Ladeluft-Drucks zwischen dem Sammler und einem dem Ladeluftkühler typischerweise nachgeschalteten Ansaugkrümmer möglich. Im Ergebnis kann also beim erfindungsgemäßen Ladeluftkühler das ausgefallene Kondensat gezielt in einem Kondensat-Aufnahmebereich des Sammlers gesammelt und auch effektiv wieder aus diesem abgeführt werden, ohne dass hierfür eine aufwändig technische Konstruktion erforderlich wäre.

Ein erfindungsgemäßer Ladeluftkühler für eine Brennkraftmaschine umfasst einen Wärmeübertrager, der mehrere Fluidpfade zum Durchströmen mit der zu kühlenden Ladeluft aufweist. Am Wärmeübertrager ist ein Sammler angebracht, der mit den Fluidpfaden kommuniziert. Ein unterer Bereich des Sammlers ist als Kondensat-Aufnahmebereich zum Aufnehmen von ausgefallenem Kondensat der Ladeluft ausgebildet ist. Im Sammler ist zumindest ein Rohrkörper angeordnet, welcher einen sowohl vom Kondensat als auch der Ladeluft durchströmbaren Fluidkanal begrenzt. In dem zumindest einen Rohrkörper wiederum ist ein Durchbruch vorhanden, der den Fluidkanal fluidisch mit dem Kondensat-Aufnahmebereich verbindet.

Bei einer bevorzugten Ausführungsform weist der Rohrkörper einen Rohrkörper-Einlass und einen Rohrkörper-Auslass auf, welche in einer Gebrauchslage des Ladeluftkühlers, insbesondere im Motorraum eines Kraftfahrzeugs, beide oberhalb des Durchbruchs angeordnet sind. Dies erlaubt eine effektive Einleitung von Ladeluft in den Rohrkörper.

Besonders bevorzugt ist der Durchbruch im Kondensat-Aufnahmebereich angeordnet, wohingegen der Rohrkörper-Einlass sowie der Rohrkörper-Auslass außerhalb des Kondensat-Aufnahmebereichs angeordnet sind. Auf diese Weise wird sichergestellt, dass nur Ladeluft über den Rohrkörper-Einlass in den Rohrkörper eingeleitet wird, dass nur Kondensat durch den Durchbruch in den Rohrkörper gelangt und dort von der Ladeluft mitgenommen wird, und dass Ladeluft und Kondensat zusammen wieder aus dem Rohrkörper austreten und den Sammler verlassen können.

Bei einer weiteren bevorzugten Ausführungsform besitzt der Rohrkörper wenigstens abschnittweise eine U-förmige Geometrie. Eine solche Geometrie erlaubt eine einfache Realisierung der o.g. vorteilhaften Anordnung von Rohrkörper-Einlass und -Auslass oberhalb des Durchbruchs.

Zweckmäßig weist der wenigstens abschnittsweise U-förmige Rohrkörper einen Basisabschnitt auf, der an seinen gegenüberliegenden Enden, vorzugsweise integral, in einen ersten und einen zweiten Schenkelabschnitt übergeht. Bei dieser Variante ist der Durchbruch im Basisabschnitt angeordnet. Der Rohrkörper-Einlass ist im ersten Schenkelabschnitt, und der Rohrkörper-Auslass ist im zweiten Schenkelabschnitt angeordnet.

Bei einer weiteren bevorzugten Ausführungsform umfasst der vom Wärmeübertrager abgewandte zweite Schenkelabschnitt einen Austrittsabschnitt. Besagter Austrittsabschnitt erstreckt sich vom Basisabschnitt weg parallel zu den Fluidleitungen des Wärmeübertragers. Hierbei ist der Rohrkörper-Auslass des Rohrkörpers im Austrittsabschnitt angeordnet. Mittels des Austrittsabschnitts kann sichergestellt werden, dass das aus dem Rohrkörper ausgeleitete Kondensat nicht wieder zurück in den Kondensat-Aufnahmebereich gelangen kann.

Bei einer vorteilhaften Weiterbildung umfasst der Sammler ein Gehäuse, welches einen Gehäuseinnenraum begrenzt. Bei dieser Weiterbildung ist der Kondensat-Aufnahmebereich Teil des Gehäuseinnenraums und von einem wannenförmig ausgebildeten Gehäuseboden begrenzt, welcher wiederum Teil des Gehäuses ist. Diese Variante ist mit besonders geringen Fertigungskosten verbunden.

Besonders bevorzugt ist der Durchbruch in einem Bereich des Basisabschnitts angeordnet, der von einem den Sammler begrenzenden Gehäuseboden einen minimalen Abstand besitzt. Auf diese Weise wird sichergestellt, dass auch bei einer geringen Menge an im Kondensat-Aufnahmebereich angesammeltem Kondensat dieses über den Durchbruch in den Rohrkörper gelangen kann.

Alternativ oder zusätzlich kann der Durchbruch dem Gehäuseboden zugewandt sein. Auch diese Maßnahme gewährleistet, dass bei einer nur geringen Menge an im Kondensat-Aufnahmebereich angesammeltem Kondensat dieses über den Durchbruch in den Rohrkörper gelangen kann.

Besonders bevorzugt ist der Rohrkörper-Einlass vom Gehäuseboden abgewandt. Dies erlaubt eine effektive Einleitung von aus dem Wärmeübertrager austretender, nicht-kondensierter Ladeluft in den Rohrkörper.

Besonders zweckmäßig münden die im Wärmeübertrager vorhandenen Fluidpfade über jeweilige Fluidpfad-Austrittsöffnungen in den Sammler. Bei dieser Variante ist der Rohrkörper-Auslass parallel zu den Fluidpfad-Austrittsöffnungen orientiert. Dies erlaubt eine effektive Abführung des Kondensats aus dem Sammler nach dem Austritt aus dem Rohrkörper, und zwar mit Hilfe der außerhalb des Rohrkörpers durch den Sammler strömenden Ladeluft.

Bei einer vorteilhaften Weiterbildung sind der Rohrkörper-Einlass, der Durchbruch, und der Rohrkörper-Auslass jeweils um 90° verdreht zueinander orientiert. Eine besonders flexible Montage und Demontage des Rohrkörpers am Sammler erlaubt eine weitere bevorzugte Ausführungsform, bei welcher das Gehäuse des Sammlers und der Rohrkörper zweiteilig ausgebildet sind. Bei dieser Variante ist der Rohrkörper lösbar am Gehäuse befestigt, was vorzugsweise mit Hilfe vorzugsweise einer Clip- oder Rastverbindung realisiert sein kann.,

Mit besonders geringen Herstellungskosten ist indes eine weitere bevorzugte Ausführungsform verbunden, bei welcher der Rohrkörper integral am Gehäuse des Sammlers ausgeformt ist.

Bei einer weiteren bevorzugten Ausführungsform sind im Sammler zumindest zwei einen jeweiligen Durchbruch aufweisende Rohrkörper aufeinandergestapelt oder übereinander angeordnet. Die wenigstens zwei Rohrkörper können im Abstand zueinander angeordnet sein oder aneinander anliegen. Bei dieser Variante sind die wenigstens zwei vorhandenen Durchbrüche im Abstand zueinander und mit unterschiedlichem Abstand zum Kondensat-Aufnahmebereich im Sammler angeordnet. Ist der Flüssigkeitsspiegel aus dem Kondensat im untersten Rohrkörper so hoch, dass der Druck der Flüssigkeitssäule über dem Durchbruch größer ist als der zur Verfügung stehende Druckabfall zwischen Einlass und Auslass des Rohres, dann ist der unterste Rohrkörper blockiert und kann keine Flüssigkeit mehr fördern. Bei der hier vorgeschlagenen Ausführungsform kann der Abtransport des Kondensates durch wenigstens einen höher angeordneten Rohrkörper aufrecht erhalten werden, welcher bei niedrigem Flüssigkeitsspiegel keine Flüssigkeit fördert, da er nicht in das Kondensat eintaucht. Auf diese Weise kann die gewünschte Wirkung des Rohrkörpers auch stark schwankendem Flüssigkeitsspiegel, beispielsweise durch schwallartig anfallendes Kondensat, gewährleistet werden.

Die Erfindung betrifft ferner eine Brennkraftmaschine mit einer Abgasanlage und mit einem vorangehend vorgestellten Ladeluftkühler. Die vorangehend erläuterten Vorteile des erfindungsgemäßen Ladeluftkühlers übertragen sich daher auch auf die Brennkraftmaschine.

Weitere wichtige Merkmale und Vorteile der Erfindung ergeben sich aus den Unteransprüchen, aus den Zeichnungen und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

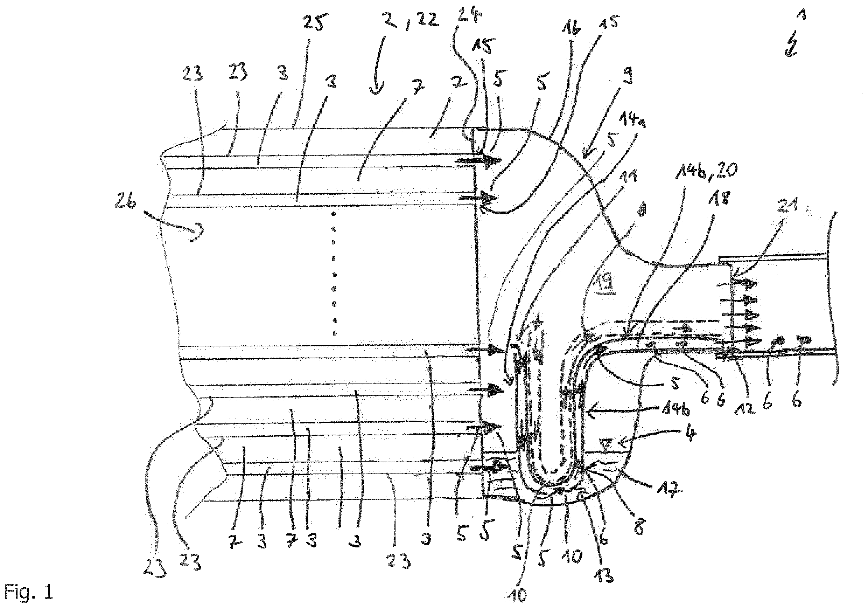

Die einzige Figur 1 illustriert in schematischer, stark vereinfachter Darstellung den Aufbau eines erfindungsgemäßen Ladeluftkühlers 1 zum Kühlen der in die Brennkammern einer Brennkraftmaschine einzuleitenden Ladeluft. Der Ladeluftkühler 1 umfasst einen Wärmeübertrager 2, der mehrere Fluidpfade 3 zum Durchströmen mit der zu kühlenden Ladeluft 5 aufweist. Die Fluidpfade 3 sind also Teil des Wärmeübertragers 2. Der Wärmeübertrager 2 kann in der Art eines Stapelscheibenwärmetauschers ausgebildet sein, welcher von der Ladeluft 5 und, fluidisch getrennt zu dieser, von einem Kühlmittel (nicht gezeigt) durchströmt wird. Hierzu wechseln sich die von der Ladeluft durchströmbaren Fluidpfade 3 entlang einer Stapelrichtung mit Kühlmittel-Pfaden 7 ab, die von dem Kühlmittel durchströmt werden können. Durch thermische Wechselwirkung der Ladeluft 5 mit dem Kühlmittel wird die Ladeluft 5 gekühlt, so dass sie nach dem Durchströmen des Ladeluftkühlers 1 mit reduzierter Temperatur wieder in die Brennkammern der Brennkraftmaschine eingeleitet werden kann. Wird der Ladeluftkühler 1 in einem Kraftfahrzeug eingesetzt, so kann als Kühlmittel die Umgebungsluft des Kraftfahrzeugs verwendet werden, in dem diese als Fahrtwind in den Ladeluftkühler 1 eingeleitet und wieder aus diesem ausgeleitet wird.

Alternativ zum Stapelscheibenwärmetauscher kann als Wärmeübertrager 2 auch ein Rohrbündel-Wärmetauscher 22 eingesetzt werden. Technisch kann der Rohrbündel-Wärmetauscher 22 durch einen Hohlzylinder 25 aus einem geeigneten Material, typischerweise aus einem Metall, realisiert sein, in dessen Innenraum 26 sich eine Mehrzahl von Rohrkörpern 23 angeordnet befinden. Alternativ zur Geometrie eines Hohlzylinders 25 sind auch andere geeignete Geometrien denkbar. Besagte Rohrkörper 23 bilden die von Ladeluft durchströmbaren Fluidpfade 3 aus. Der zu diesen Rohrkörpern 23 komplementäre Teil des Innenraums 26 bildet einen oder mehrere Kühlmittelpfade 7 zum Durchströmen mit dem Kühlmittel. Die Rohrkörper 23 können an einer Endplatte 24 des Wärmeübertragers 2 fixiert sein.

Der genauere konstruktive Aufbau des Wärmeübertragers 2 bzw. RohrbündelWärmetauschers 22 ist nicht Kern der hier vorgestellten Erfindung und dem einschlägigen Fachmann bekannt, so dass an dieser Stelle auf detailliertere Erläuterungen verzichtet wird. Für die vorliegende Erfindung relevant ist jedoch ein am Wärmeübertrager 2 angebrachter und mit den Fluidpfaden 3 kommunizierender Sammler 9, der fluidisch mit den Fluidpfaden 3 kommuniziert. Auf diese Weise kann die Ladeluft 5 nach dem Durchströmen der einzelnen Fluidpfade 3 gesammelt und in die Brennkammern der Brennkraftmaschine eingeleitet werden. Der Sammler 9 umfasst ein Gehäuse 16, welches einen Gehäuseinnenraum 19 begrenzt. Ein unterer Teil des Gehäuses 16 wird durch einen Gehäuseboden 17 gebildet, der integral am Gehäuse 16 ausgeformt sein kann.

Im Zuge der Kühlung der Ladeluft 5 im Wärmeübertrager 2 kann ein Teil der gasförmigen Ladeluft auskondensieren und als Kondensat 6 im Ladeluftkühler 1 ausfallen. Hierfür umfasst der Ladeluftkühler 1 einen Kondensat-Aufnahmebereich 4 dieses Kondensats 6. Wie Figur 1 anschaulich belegt, wird der Kondensat-Aufnahmebereich 4 zum Aufnehmen der kondensierten Ladeluft 5 durch einen unteren Bereich 7 des Sammlers 9 ausgebildet. Somit muss für den Kondensat-Aufnahmebereich 4 kein zusätzlicher Bauraum am Ladeluftkühler 1 bereitgestellt werden. Der Kondensat-Aufnahmebereich 4 wird vom Gehäuseboden 17 des Gehäuses 16 des Sammlers 9 begrenzt und ist im Beispielszenario wannenförmig ausgebildet.

Zur Abführung des im Kondensat-Aufnahmebereich 4 angesammelten Kondensats 6 aus dem Sammler 9 ist im Gehäuseinnenraum 19 ein Rohrkörper 8 angeordnet, welcher einen Fluidkanal 18 begrenzt. Im Rohrkörper 8 ist ein Durchbruch 10 vorhanden, der den Fluidkanal 18 fluidisch mit dem Kondensat-Aufnahmebereich 4 verbindet. Der Durchbruch 10 ist innerhalb des Kondensat-Aufnahmebereichs 4 im Rohrkörper 8 angeordnet. Durch den Durchbruch 10 hindurch kann das Kondensat 6 aus dem Kondensat-Aufnahmebereich 4 in den Rohrkörper 8 gelangen.

Der Rohrkörper 8 weist ferner einen Rohrkörper-Einlass 11 und einen Rohrkörper-Auslass 12 auf, welche in einer Gebrauchslage des Ladeluftkühlers 1 beide oberhalb des Durchbruchs 10 angeordnet sind. Der Rohrkörper-Einlass 11 sowie der Rohrkörper-Auslass 12 sind beide außerhalb des Kondensat-Aufnahmebereichs 4 angeordnet. Somit kann auch aus dem Wärmeübertrager 2 ausgetretene, nicht kondensierte Ladeluft 5 in den Rohrkörper gelangen, den Rohrkörper 8 durchströmen und wieder aus diesem austreten. Das im Kondensat-Aufnahmebereich 4 vorhandene Kondensat wird dabei wie in Figur 1 angedeutet von der durch den Rohrkörper 8 strömenden Ladeluft 5 mitgenommen und auf diese Weise aus dem Kondensat-Aufnahmebereich 4 und somit auch aus dem Sammler 9 heraustransportiert. Das Kondensat 6 kann dabei als Flüssigkeitsfilm, als Schaum oder in Form von Pfropfen von der Ladeluft "mitgerissen" werden.

Nach dem Verlassen des Rohrkörpers 8 durch den Rohrkörper-Auslass 12 können Ladeluft 5 und Kondensat 6 zusammen mit der nicht durch den Rohrkörper 8 geführten Ladeluft durch einen im Gehäuse 16 des Sammlers 9 vorgesehenen Sammler-Auslass 21 aus dem Sammler 9 ausgeleitet werden. Der Rohrkörper 8 kann aus einem Metall oder aus einem Kunststoff hergestellt sein und mittels einer lösbaren Verbindung (in Figur 1 nicht gezeigt), beispielsweise mittels einer Clip- oder Rastverbindung, am Gehäuse 16 befestigt sein. Der Rohrkörper 8 kann mit einem Innendurchmesser von 8 mm bis 10 mm realisiert sein. Alternativ dazu ist es aber auch eine einteilige Ausführung denkbar, bei welcher der Rohrkörper 8 aus Kunststoff integral am Gehäuse 16 aus Kunststoff ausgeformt ist.

Als Gebrauchslage wird im Beispielszenario die Einbauorientierung des Ladeluftkühlers 1 im Motorraum eines Kraftfahrzeugs verstanden.

Wie Figur 1 erkennen lässt, besitzt der Rohrkörper 8 abschnittweise eine U-förmige Geometrie. Der abschnittsweise U-förmige Rohrkörper 8 umfasst einen Basisabschnitt 13, der an seinen gegenüberliegenden Enden in einen ersten und einen zweiten Schenkelabschnitt 14a, 14b übergeht. Der Durchbruch 10 ist im Basisabschnitt 13 angeordnet. Der Durchbruch 10 kann als Durchgangsbohrung ausgeführt sein, welche einen Durchmesser zwischen 1 mm und 2mm aufweist. Der Rohrkörper-Einlass 11 ist im ersten Schenkelabschnitt 14a und der Rohrkörper-Auslass 12 im zweiten Schenkelabschnitt 14b angeordnet. Der vom Wärmeübertrager 2 abgewandte, zweite Schenkelabschnitt 14b umfasst einen Austrittsabschnitt 20, der sich vom Basisabschnitt weg parallel zu den Fluidleitungen 3 des Wärmeübertragers erstreckt. Der Rohrkörper-Auslass 12 ist im Austrittsabschnitt 20 angeordnet. Der Rohrkörper-Einlass 11 ist vom Gehäuseboden 17 abgewandt.

Wie Figur 1 außerdem illustriert, ist der Durchbruch 10 in einem Bereich des Basisabschnitts 13 des U-förmigen Rohrkörpers 8 angeordnet, der von dem Gehäuseboden 17 des Gehäuses 16 einen minimalen Abstand besitzt. Der Durchbruch 10 ist dabei dem Gehäuseboden 17 zugewandt.

Die im Wärmeübertrager 2 vorhandenen Fluidpfade 3 münden über jeweilige Fluidpfad-Austrittsöffnungen 15 in den Sammler 9. Der Rohrkörper-Auslass 12 ist parallel zu den Fluidpfad-Austrittsöffnungen 15 orientiert. Im Beispielszenario sind der Rohrkörper-Einlass 11, der Durchbruch 10, und der Rohrkörper-Auslass 12 jeweils um 90° verdreht zueinander orientiert.

Das Gehäuse 16 des Sammlers 9 und der Rohrkörper 8 können zweiteilig ausgebildet sein. Bei dieser Variante kann der Rohrkörper mittels einer Clip- oder Rastverbindung (in Figur 1 nicht gezeigt lösbar am Gehäuse 16 befestigt sein. Alternativ dazu kann der Rohrkörper 8 aber auch integral am Gehäuse 16 des Sammlers 9 ausgeformt sein.

Bei einer Weiterbildung ist nicht nur ein einziger Rohrkörper 8 im Sammler 9 angeordnet, sondern es sind zumindest zwei einen jeweiligen Durchbruch 10 aufweisende Rohrkörper 8 aufeinandergestapelt. Bei dieser Variante sind die wenigstens zwei vorhandenen Durchbrüche 10-jeder Rohrkörper 8 ist mit einem Durchbruch 10 ausgestattet - im Abstand zueinander und mit unterschiedlichem Abstand zum Kondensat-Aufnahmebereich 4 bzw. zum Gehäuseboden 17 im Sammler 9 angeordnet. Ist der Flüssigkeitsspiegel aus dem Kondensat 6 im untersten, also dem Kondensat-Aufnahmebereich 4 bzw. dem Gehäuseboden 17 nächstgelegensten Rohrkörper 8 so hoch, dass der Druck der Flüssigkeitssäule des Kondensats 6 über dem Durchbruch 10 größer ist als der zur Verfügung stehende Druckabfall zwischen Rohrkörper-Einlass 11 und Rohrkörper-Auslass 13 des Rohrkörpers 8, so ist der unterste Rohrkörper 8 blockiert und kann kein Kondensat 6 fördern. Bei der Weiterbildung mit zumindest zwei Rohrkörpern 8 hingegen kann der Abtransport des Kondensates 6 durch wenigstens einen höher angeordneten Rohrkörper 8 aufrecht erhalten werden, welcher bei niedrigem Flüssigkeitsspiegel keine Flüssigkeit fördert, da er nicht in das Kondensat 6 eintaucht. Ein solcher weiterer Rohrkörper 8 ist in Figur 1 in gestrichelter Darstellung angedeutet. Es ist klar, dass im Sammler 9 auch drei oder mehr Rohrkörper 8 aufeinandergestapelt angeordnet sein können, was in Figur 1 der Übersichtlichkeit halber nicht dargestellt ist. Auf diese Weise kann die gewünschte Wirkung des Rohrkörpers 8 auch stark schwankendem Flüssigkeitsspiegel, beispielsweise durch schwallartig anfallendes Kondensat, gewährleistet werden.

## Patentansprüche

1. Ladeluftkühler (1) für eine Brennkraftmaschine,
- mit einem Wärmeübertrager (2), der mehrere Fluidpfade (3) zum Durchströmen mit der zu kühlenden Ladeluft (5) aufweist,
- mit einem am Wärmeübertrager (2) angebrachten und mit den Fluidpfaden (3) kommunizierenden Sammler (9),
- wobei ein unterer Bereich (7) des Sammlers (9) als Kondensat-Aufnahmebereich (4) zum Aufnehmen von kondensierter Ladeluft (5) ausgebildet ist,
- wobei im Sammler (9) ein zumindest ein Rohrkörper (8) angeordnet ist, welcher einen sowohl von kondensierter als auch nicht-kondensierter Ladeluft (5) durchströmbaren Fluidkanal (18) begrenzt,
- wobei im Rohrkörper (8) ein Durchbruch (10) ausgebildet ist, der den Fluidkanal (18) fluidisch mit dem Kondensat-Aufnahmebereich (4) verbindet.

2. Ladeluftkühler nach Anspruch 1,
**dadurch gekennzeichnet, dass**
der Rohrkörper (8) einen Rohrkörper-Einlass (11) und einen Rohrkörper-Auslass (12) aufweist, welche in einer Gebrauchslage des Ladeluftkühlers (1) beide oberhalb des Durchbruchs (10) angeordnet sind.

3. Ladeluftkühler nach Anspruch 1 oder 2,
**dadurch gekennzeichnet, dass**
der Durchbruch (10) im Kondensat-Aufnahmebereich (4) angeordnet ist und der Rohrkörper-Einlass (11) sowie der Rohrkörper-Auslass (12) außerhalb des Kondensat-Aufnahmebereichs (4) angeordnet sind.

4. Ladeluftkühler nach einem der Ansprüche 1 bis 3,
**dadurch gekennzeichnet, dass**
der Rohrkörper (8) wenigstens abschnittweise eine U-förmige Geometrie besitzt.

5. Ladeluftkühler nach Anspruch 4,
**dadurch gekennzeichnet, dass**
der wenigstens abschnittsweise U-förmige Rohrkörper (8) einen Basisabschnitt (13) aufweist, der an seinen gegenüberliegenden Enden in einen ersten und einen zweiten Schenkelabschnitt (14a, 14b) übergeht,
wobei der Durchbruch (10) im Basisabschnitt (13) angeordnet ist und der Rohrkörper-Einlass (11) im ersten Schenkelabschnitt (14a) angeordnet ist und der Rohrkörper-Auslass (12) im zweiten Schenkelabschnitt (14b) angeordnet ist.

6. Ladeluftkühler nach Anspruch 5,
**dadurch gekennzeichnet, dass**
der vom Wärmeübertrager (2) abgewandte zweite Schenkelabschnitt (14b) einen Austrittsabschnitt (20) umfasst, der sich vom Basisabschnitt weg parallel zu den Fluidleitungen (3) des Wärmeübertragers (2) erstreckt und in welchem der Rohrkörper-Auslass (12) vorgesehen ist.

7. Ladeluftkühler nach einem der vorhergehenden Ansprüche,
**dadurch gekennzeichnet, dass**
- der Sammler (9) ein Gehäuse (16) umfasst, welches einen Gehäuseinnenraum (19) begrenzt,
- der Kondensat-Aufnahmebereich (4) Teil des Gehäuseinnenraums (19) ist und von einem wannenförmig ausgebildeten Gehäuseboden (17) begrenzt ist, welcher Teil des Gehäuses (16) ist.

8. Ladeluftkühler nach Anspruch 7,
**dadurch gekennzeichnet, dass**
der Durchbruch (10) in einem Bereich des Basisabschnitts (13) des Rohrkörpers (8) angeordnet ist, der von dem den Kondensat-Aufnahmebereich (4) begrenzenden Gehäuseboden (17) einen minimalen Abstand besitzt.

9. Ladeluftkühler nach einem der Ansprüche 6 bis 8,
**dadurch gekennzeichnet, dass**
der Durchbruch (10) dem Gehäuseboden (17) zugewandt ist.

10. Ladeluftkühler nach einem der Ansprüche 5 bis 9,
**dadurch gekennzeichnet, dass**
der Rohrkörper-Einlass (11) vom Gehäuseboden (17) abgewandt ist.

11. Ladeluftkühler nach einem der Ansprüche 5 bis 10,
**dadurch gekennzeichnet, dass**
die im Wärmeübertrager (2) vorhandenen Fluidpfade (3) über jeweilige Fluidpfad-Austrittsöffnungen (15) in den Sammler (9) münden und der Rohrkörper-Auslass (12) parallel zu den Fluidpfad-Austrittsöffnungen (15) orientiert ist.

12. Ladeluftkühler nach einem der Ansprüche 5 bis 11,
**dadurch gekennzeichnet, dass**
der Rohrkörper-Einlass (11) und der im Rohrkörper (8) ausgebildete Durchbruch (10) und der Rohrkörper-Auslass (12) jeweils um 90° verdreht zueinander orientiert sind.

13. Ladeluftkühler nach einem der Ansprüche 7 bis 12,
**dadurch gekennzeichnet, dass**
das Gehäuse (16) des Sammlers (9) und der Rohrkörper (8) zweiteilig ausgebildet sind und dass der Rohrkörper (8), vorzugsweise mittels einer Clip- oder Rastverbindung, lösbar am Gehäuse (16) befestigt ist.

14. Ladeluftkühler nach einem der Ansprüche 7 bis 12,
**dadurch gekennzeichnet, dass**
der Rohrkörper (8) integral am Gehäuse (16) des Sammlers (9) ausgeformt ist.

15. Ladeluftkühler nach einem der vorhergehenden Ansprüche,
**dadurch gekennzeichnet, dass**
im Sammler (9) zumindest zwei einen jeweiligen Durchbruch (10) aufweisende Rohrkörper (8) aufeinandergestapelt sind, so dass die wenigstens zwei Durchbrüche (10) im Abstand zueinander und mit unterschiedlichem Abstand zum Kondensat-Aufnahmebereich (4) im Sammler (9) angeordnet sind.

16. Brennkraftmaschine mit einer Abgasanlage und mit einem Ladeluftkühler (1) nach einem der vorhergehenden Ansprüche.
